# EUROPEAN PATENT APPLICATION

(11) **EP 3 912 747 A1**
(43) Date of publication of application: **24.11.2021**
(21) Application number: 21169073.0
(22) Date of filing: 19.04.2021
(51) Int. Cl.: B21D 39/06, B21D 53/06, B21D 39/20, F28D 7/16, F28F 9/16, F16L 41/00, H02K 9/18

(54) **METHOD OF MANUFACTURING HEAT EXCHANGER FOR ROTATING ELECTRICAL MACHINE, AND PRESSING DEVICE**

(30) Priority: 22.05.2020 JP 2020090097
(71) Applicant: TOSHIBA MITSUBISHI-ELECTRIC INDUSTRIAL SYSTEMS CORPORATION, Chuo-ku Tokyo 104-0031 (JP)
(72) Inventor: KURITA, Satoshi, Tokyo, 104-0031 (JP)
(74) Representative: TBK

(57) **Abstract**

In a method of manufacturing a heat exchanger for a rotating electrical machine, a pressing device is placed inside a tube with elastic members compressed so that a first pressing part and a second pressing part press the tube mutually oppositely in directions in which the diameter of at least a part of the tube located between two through holes of two supporting members expands. Pressure is built up in the tube and the tube is plastically deformed to form an inside large diameter part and inside connecting parts.

## Description

### FIELD

Embodiments described herein relate generally to a method of manufacturing a heat exchanger for a rotating electrical machine, and a pressing device.

### BACKGROUND

Known rotating electrical machines use a heat exchanger for a rotating electrical machine to liberate heat generated by the rotating electrical machines, thereby cooling the rotating electrical machines. The heat exchanger for a rotating electrical machine has cooling tubes fastened to two supporting members while the cooling tubes are inserted into through tubes of the respective supporting members. For such a heat exchanger for a rotating electrical machine, the cooling tubes having elliptic cross sections are sometimes used in order to improve efficiency of heat exchange. A conventional technique is described in Japanese Patent Application Laid-open No. 2019-115227, for example.

However, in the conventional heat exchangers for a rotating electrical machine, because the cooling tubes having elliptic cross sections are fastened to the supporting members with an adhesive, aging, for example, of the adhesive may decrease the reliability of fastening of the cooling tubes to the supporting members.

In view of the foregoing, it is an object of the present invention to provide a method of manufacturing a heat exchanger for a rotating electrical machine, the method being able to easily prevent a decrease in reliability of fastening of tubes having elliptic cross sections to supporting members.

### SUMMARY

A method of manufacturing a heat exchanger for a rotating electrical machine according to an aspect of the present invention, incudes: inserting a tube into through holes of two supporting members, the tube having an external shape that enables insertion into the through holes that are provided in the two supporting members arranged to be separated from each other, and that are arranged in an arrangement direction of the two supporting members; mounting a pressing device in the tube by placing the pressing device inside the tube, the pressing device having, when placed in the tube, a first pressing part that extends in an axial direction of the tube, a second pressing part that is provided so as to be opposed to the first pressing part and that extends in the axial direction of the tube, and an elastic member that is interposed between the first pressing part and the second pressing part, the mounting being performed with the elastic member compressed so that the first pressing part and the second pressing part press the tube mutually oppositely in directions in which a diameter of at least a part of the tube expands, the part being located between two of the through holes of the two supporting members; forming an inside large diameter part and inside connecting parts in the tube by building up pressure inside the tube in which the pressing device is mounted and plastically deforming the tube, the inside large diameter part being located between the two supporting members, a cross section of the inside large diameter part orthogonal to the arrangement direction of the two supporting members having an elliptic shape, a major axis direction of the elliptic shape being along an arrangement direction of the first pressing part and the second pressing part, an external shape of the cross section being larger than external shapes of the through holes, the inside connecting parts connecting the inside large diameter part to insertion parts and facing the supporting members, the insertion parts being parts located inside the through holes in the tube; and removing the pressing device from the tube in which the inside large diameter part and the inside connecting parts are formed.

### BRIEF DESCRIPTION OF THE DRAWINGS

FIG. 1 is an illustrative sectional view of a structure of a totally enclosed external fan-cooled rotating electrical machine according to an embodiment;
FIG. 2 is a view from the direction shown by an arrow II in FIG. 1;
FIG. 3 is an illustrative sectional view of a portion of a heat exchanger in the totally enclosed external fan-cooled rotating electrical machine according to the embodiment;
FIG. 4 is a sectional view taken along line IV-IV in FIG. 3;
FIG. 5 is a flow chart illustrating a method of manufacturing the heat exchanger according to the embodiment;
FIG. 6 is a view illustrating an inserting step in the method of manufacturing the heat exchanger according to the embodiment;
FIG. 7 is an illustrative perspective view of a tube that is a raw material for a cooling tube of the heat exchanger according to the embodiment;
FIG. 8 is a view illustrating a mounting step in the method of manufacturing the heat exchanger according to the embodiment;
FIG. 9 is an illustrative side view of a pressing device used in the method of manufacturing the heat exchanger according to the embodiment;
FIG. 10 is a perspective view of a portion of the tube and the pressing device according to the embodiment, and is a view of a state in which the pressing device is mounted in the tube;
FIG. 11 is a sectional view taken along line XI-XI in FIG. 8;
FIG. 12 is a view illustrating a plug attaching step included in a forming step in the method of manufacturing the heat exchanger according to the embodiment;
FIG. 13 is a view illustrating a pressing step included in the forming step in the method of manufacturing the heat exchanger according to the embodiment; and
FIG. 14 is an illustrative side view of a pressing device according to a modification of the embodiment.

### DETAILED DESCRIPTION

An illustrative embodiment of the present invention will be described below. A constitution (technical character) of the embodiment as well as a mode of the operation and a result (effect) brought about by the constitution will be described below by way of example.

### Structure of Totally Enclosed External Fan-Cooled Rotating electrical machine 1

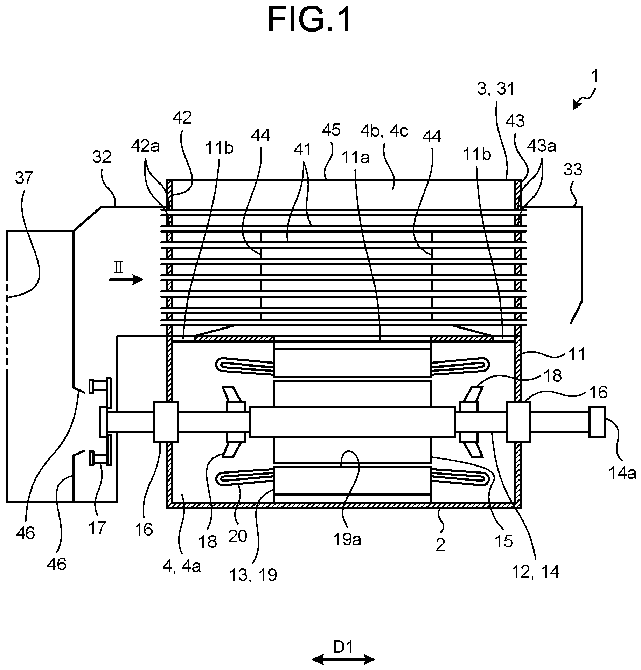

FIG. 1 is an illustrative sectional view of a structure of a totally enclosed external fan-cooled rotating electrical machine 1 according to the embodiment.

As illustrated in FIG. 1, the totally enclosed external fan-cooled rotating electrical machine 1 includes a rotating electrical machine main body 2 configured to perform a rotary operation, and a cooler 3. In the interior of the totally enclosed external fan-cooled rotating electrical machine 1, an enclosed space 4 filled with a cooling gas, such as the air, is provided running from the rotating electrical machine main body 2 and the cooler 3. The cooling gas in the enclosed space 4 that has been heated by the rotating electrical machine main body 2 generating heat is subjected to a heat exchange with outside air in the cooler 3, thereby cooling the rotating electrical machine main body 2.

The rotating electrical machine main body 2 has a frame 11, a rotor 12, and a stator 13.

The frame 11 is formed into a box shape. The frame 11 houses therein a portion of the rotor 12 and the stator 13.

The rotor 12 has a rotor shaft 14 and a rotor core 15. The rotor core 15 is fixed to a part of the rotor shaft 14 between both ends thereof in the axial direction.

The rotor shaft 14 is supported by the frame 11 through two bearings 16 in a rotatable manner. The two bearings 16 are located on both sides of the rotor core 15 in the axial direction of the rotor shaft 14. The bearings 16 are, for example, sliding bearings or anti-friction bearings.

Both ends of the rotor shaft 14 in the axial direction project from the frame 11 to the outside of the frame 11. One end of the rotor shaft 14 in the axial direction has a coupling part 14a provided thereto. The coupling part 14a is coupled to a coupling object (not illustrated). The other end of the rotor shaft 14 in the axial direction has an external fan 17 fixed thereto. The external fan 17 rotates integrally with the rotor shaft 14. An internal fan 18 is also fixed between each of the two bearings 16 of the rotor shaft 14 and the rotor core 15. The internal fans 18 rotate integrally with the rotor shaft 14.

The stator 13 has a stator core 19 and a stator winding 20. The stator core 19 is located outside the rotor core 15 in the radial direction of the rotor shaft 14, and is formed into a cylindrical shape surrounding the rotor core 15. The stator winding 20 is fixed to the stator core 19 by passing through a plurality of slots (not illustrated) formed in an inner periphery 19a of the stator core 19 in such a manner as to extend in the axial direction of the rotor shaft 14.

The cooler 3 has a heat exchanger 31, an external fan cover 32, and an outlet guide 33.

The heat exchanger 31 is disposed in the upper side of the frame 11, and is incorporated into the frame 11. The cooler 3 has a plurality of cooling tubes 41, an inlet end plate 42, an outlet end plate 43, and a cooling tube cover 45. The cooling tubes 41 are arranged in parallel with each other. The inlet end plate 42 and the outlet end plate 43 are arranged to be spaced from each other in the axial direction of the cooling tubes 41, and are opposed to each other. The inlet end plate 42 and the outlet end plate 43 support both ends of the cooling tubes 41 in the axial direction. Details on the cooling tubes 41, the inlet end plate 42, and the outlet end plate 43 will be described later. The cooling tube cover 45 is provided running from the inlet end plate 42 and the outlet end plate 43, and houses therein the cooling tubes 41. The inlet end plate 42 and the outlet end plate 43 are examples of supporting members.

The cooling tubes 41, the inlet end plate 42, the outlet end plate 43, the cooling tube cover 45, and the frame 11 are connected to each other, and form the enclosed space 4. A space 4a inside the frame 11 of the enclosed space 4 and a space 4b inside the cooling tube cover 45 communicate with each other by means of an inlet 11a and two outlets 11b. The inlet 11a is formed above the stator 13 in the frame 11. The two outlets 11b are formed diagonally above the corresponding internal fans 18 in the frame 11. The inlet 11a is located between the two outlets 11b.

The cooling tube cover 45 has two guide plates 44 provided therein. The two guide plates 44 are arranged to be spaced from each other in the axial direction of the cooling tubes 41 between the inlet end plate 42 and the outlet end plate 43. The two guide plates 44 extend upward from the bottom of the space 4b so as to exclude an upper communicating space 4c of the space 4b inside the cooling tube cover 45, and partition the space excluding the upper communicating space 4c, of the space 4b inside the cooling tube cover 45, in the axial direction of the cooling tubes 41.

The external fan cover 32 is fixed to the inlet end plate 42, and houses therein the external fan 17. The external fan cover 32 has an inlet port 37 provided thereto, and when the external fan 17 rotates, outside air flows from the inlet port 37 into the external fan cover 32. The external fan cover 32 is also connected to the inlet end plate 42 so that the outside air that has flowed into the external fan cover 32 by means of the external fan 17 can flow into the cooling tubes 41. Additionally, the external fan cover 32 has guide members 46 provided therein, the guide members 46 guiding the outside air that has flowed from the inlet port 37 into the external fan cover 32 so that the outside air can pass through the external fan 17 and flow into the cooling tubes 41.

The outlet guide 33 is fixed to the outlet end plate 43. The outlet guide 33 guides the outside air flowing out of the cooling tubes 41 to a given direction.

### Gas Flows in Totally Enclosed External Fan-Cooled Rotating electrical machine 1

Gas flows in the totally enclosed external fan-cooled rotating electrical machine 1 having the aforementioned structure will be described next.

The cooling gas inside the enclosed space 4 will be described first. The cooling gas in the space 4a inside the frame 11 of the enclosed space 4 is pressure-fed by the two internal fans 18 configured to rotate integrally with the rotor shaft 14, flows along the rotor 12 and the stator 13 to cool the rotor 12 and the stator 13, and then flows outside the stator core 19 in the radial direction. The cooling gas that has flowed outside the stator core 19 in the radial direction flows into the space 4b inside the cooler 3 by way of the inlet 11a. The cooling gas that has flowed into the space 4b inside the cooler 3 goes up between the two guide plates 44, and flows into the upper communicating space 4c, while being subjected to a heat exchange with the outside air flowing through the cooling tubes 41 and being cooled in the process of passing outside the cooling tubes 41.

The cooling gas in the upper communicating space 4c diverted to mutually opposite directions in the axial direction of the cooling tubes 41, and goes down between the inlet end plate 42 and the guide plates 44 and between the outlet end plate 43 and the guide plates 44, while being subjected to a heat exchange with the outside air inside the cooling tubes 41 and being cooled. Thereafter, the cooling gas returns to the space 4a inside the frame 11 through the outlets 11b, and flows into the respective internal fans 18 again.

The outside air will be described next. The outside air flows from the inlet port 37 into the external fan cover 32 by means of the external fan 17 configured to rotate integrally with the rotor shaft 14, passes through the external fan cover 32, and reaches the inlet end plate 42. The outside air that has reached the inlet end plate 42 flows into the cooling tubes 41 that are open at the inlet end plate 42, passes through the cooling tubes 41 while being exposed to heat from the cooling gas outside the cooling tubes 41 and being raised in temperature inside the cooling tubes 41, and then flows out of openings at the outlet end plate 43 to the outside of the cooler 3. In this manner, heat is exchanged between the outside air inside the cooling tubes 41 and the cooling gas outside the cooling tubes 41, whereby the rotor 12 and the stator 13 are cooled.

### Detailed Structure of Heat Exchanger 31

The inlet end plate 42, the outlet end plate 43, and the cooling tubes 41 of the heat exchanger 31 will be described next in detail with reference to FIGS. 1 to 4, for example.

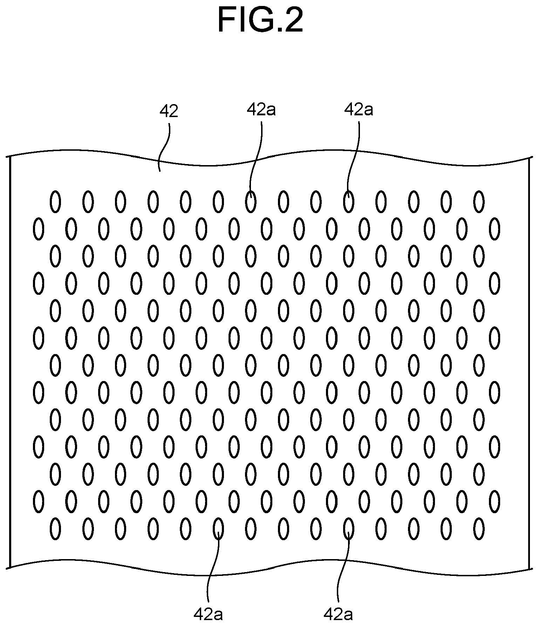

FIG. 2 is a view from the direction shown by an arrow II in FIG. 1. In FIG. 2, the cooling tubes 41 are omitted. As illustrated in FIGS. 1 and 2, the inlet end plate 42 has a plurality of through holes 42a provided therein. The through holes 42a are each formed into an ellipse having the major axis direction (the longitudinal direction) along the up-and-down direction, that is, the flow direction of the cooling gas. As illustrated in FIG. 1, the outlet end plate 43 has a plurality of through holes 43a provided therein. The through holes 43a are each formed into an ellipse having the major axis direction along the up-and-down direction, the major axis direction being the same as that of the through holes 42a. Each of the through holes 43a has the same size as that of each of the through holes 42a. The through holes 42a of the inlet end plate 42 and the through holes 43a of the outlet end plate 43 are arranged in a plate arrangement direction D1, which is the arrangement direction of the inlet end plate 42 and the outlet end plate 43. The inlet end plate 42 and the outlet end plate 43 are, for example, made of a metallic material.

As illustrated in FIG. 1, the cooling tubes 41 are supported by the inlet end plate 42 and the outlet end plate 43 while being inserted into the through holes 42a of the inlet end plate 42 and the through holes 43a of the outlet end plate 43 that are arranged in the plate arrangement direction D1 with the through holes 42a. That is, the axial direction of the cooling tubes 41 is along the plate arrangement direction D1.

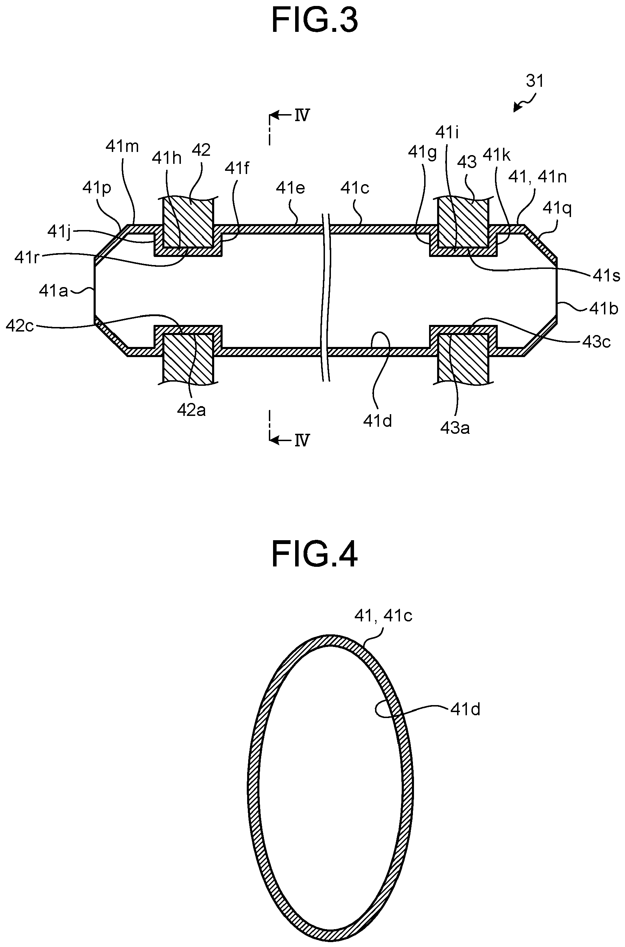

FIG. 3 is an illustrative sectional view of a portion of the heat exchanger 31 in the totally enclosed external fan-cooled rotating electrical machine 1 according to the embodiment. FIG. 4 is a sectional view taken along line IV-IV in FIG. 3.

As illustrated in FIGS. 3 and 4, the cooling tube 41 is made up of a stepped elliptic tube. That is, as illustrated in FIG. 4, the cross section of the cooling tube 41 orthogonal to the axial direction of the cooling tubes 41 is elliptic. Hereinafter, the cross section of the cooling tube 41 is the cross section of the cooling tube 41 orthogonal to the axial direction of the cooling tubes 41, and the axial direction is the axial direction of the cooling tubes 41, unless otherwise stated. The cooling tubes 41 is, for example, made of a metallic material such as stainless steel.

As illustrated in FIG. 3, the cooling tube 41 has both ends 41a, 41b in the axial direction of the relevant cooling tube 41. The end 41a is an end constituting the inlet for the outside air in the cooling tube 41, and the end 41b is an end constituting the outlet for the outside air in the cooling tube 41. The cooling tube 41 also has an outer peripheral surface 41c and an inner peripheral surface 41d. The outer peripheral surface 41c and the inner peripheral surface 41d are formed running over both ends 41a, 41b.

Additionally, the cooling tube 41 has an inside large diameter part 41e, two inside connecting parts 41f, 41g, two insertion parts 41h, 41i, two outside connecting parts 41j, 41k, two outside large diameter parts 41m, 41n, and two diameter varying parts 41p, 41q. The inside large diameter part 41e, the two inside connecting parts 41f, 41g, the two insertion parts 41h, 41i, the two outside connecting parts 41j, 41k, the two outside large diameter parts 41m, 41n, and the two diameter varying parts 41p, 41q all have elliptic cross sections.

The inside large diameter part 41e is located between the inlet end plate 42 and the outlet end plate 43, that is, inside the inlet end plate 42 and the outlet end plate 43, and extends in the axial direction. Thus, the cooling gas flows outside the inside large diameter part 41e. The inside large diameter part 41e has a larger diameter than those of the corresponding through hole 42a of the inlet end plate 42 and the corresponding through hole 43a of the outlet end plate 43. In other words, the elliptic cross section of the inside large diameter part 41e has a larger external shape than those of the through holes 42a, 43a.

The two insertion parts 41h, 41i are respectively connected to both ends of the inside large diameter part 41e in the axial direction through the two inside connecting parts 41f, 41g. The two insertion parts 41h, 41i are respectively inserted into the corresponding through hole 42a of the inlet end plate 42 and the through hole 43a of the outlet end plate 43, and are fitted into those through holes 42a, 43a. That is, the outer peripheral surface 41c on the two insertion parts 41h, 41i are respectively in contact with a peripheral surface 42c that forms the through hole 42a in the inlet end plate 42 and a peripheral surface 43c that forms the through hole 43a in the outlet end plate 43. The two insertion parts 41h, 41i each have a smaller diameter than that of the inside large diameter part 41e. In other words, the inside large diameter part 41e has a larger diameter than those of the two insertion parts 41h, 41i. The insertion parts 41h, 41i are referred to as small diameter parts.

The two inside connecting parts 41f, 41g are located between the inlet end plate 42 and the outlet end plate 43, that is, inside the inlet end plate 42 and the outlet end plate 43, and are respectively in contact with the inlet end plate 42 and the outlet end plate 43.

The two outside large diameter parts 41m, 41n are respectively connected to both ends of the two insertion parts 41h, 41i in the axial direction through the two outside connecting parts 41j, 41k. The two outside large diameter parts 41m, 41n are respectively located outside the inlet end plate 42 and the outlet end plate 43, and extend in the axial direction. That is, the inlet end plate 42 and the outlet end plate 43 are located between the two outside large diameter parts 41m, 41n. The outside large diameter parts 41m, 41n each have a larger diameter than those of the corresponding through hole 42a of the inlet end plate 42 and the corresponding through hole 43a of the outlet end plate 43. In other words, the elliptic cross sections of the outside large diameter parts 41m, 41n have a larger external shape than those of the through holes 42a, 43a. The outside large diameter parts 41m, 41n each have the same outside diameter and the inside diameter as the outside diameter and the inside diameter of the inside large diameter part 41e.

The two outside connecting parts 41j, 41k are located outside the inlet end plate 42 and the outlet end plate 43, and are respectively in contact with the inlet end plate 42 and the outlet end plate 43. That is, the inlet end plate 42 and the outlet end plate 43 are located between the two outside connecting parts 41j, 41k.

The two diameter varying parts 41p, 41q extend in mutually opposite directions from ends of the two outside large diameter parts 41m, 41n opposite to the two outside connecting parts 41j, 41k. The two diameter varying parts 41p, 41q each have smaller outside and inside diameters as they are away from the two outside large diameter parts 41m, 41n.

The outer peripheral surface 41c of the cooling tube 41 has two grooves 41r, 41s formed therein. The two grooves 41r, 41s are respectively bordered by the two inside connecting parts 41f, 41g, the two insertion parts 41h, 41i, and the two outside connecting parts 41j, 41k. That is, the two grooves 41r, 41s are open to the outside of the cooling tube 41 in the radial direction, and are formed into concave shapes that are depressed to the inside of the cooling tube 41 in the radial direction. The two grooves 41r, 41s are formed into ring shapes extending in the circumferential direction of the cooling tube 41. The two grooves 41r, 41s have the edge of the through hole 42a in the inlet end plate 42 and the edge of the through hole 43a in the outlet end plate 43.

The cooling tube 41 having the aforementioned structure has the edge of the through hole 42a in the inlet end plate 42 and the edge of the through hole 43a in the outlet end plate 43 fitted into the two grooves 41r, 41s, thereby being fastened to the inlet end plate 42 and the outlet end plate 43. Here, movement of the cooling tube 41 in the axial direction is restricted by the two inside connecting parts 41f, 41g being in contact with the inlet end plate 42 and the outlet end plate 43 and the two outside connecting parts 41j, 41k being in contact with the inlet end plate 42 and the outlet end plate 43. Additionally, movement of the cooling tube 41 in the radial direction is restricted by the two insertion parts 41h, 41i being in contact with the peripheral surface 42c of the inlet end plate 42 and the peripheral surface 43c of the outlet end plate 43. In this manner, the cooling tube 41 is fastened to the inlet end plate 42 and the outlet end plate 43 by a fit.

### Method of Manufacturing Heat Exchanger 31

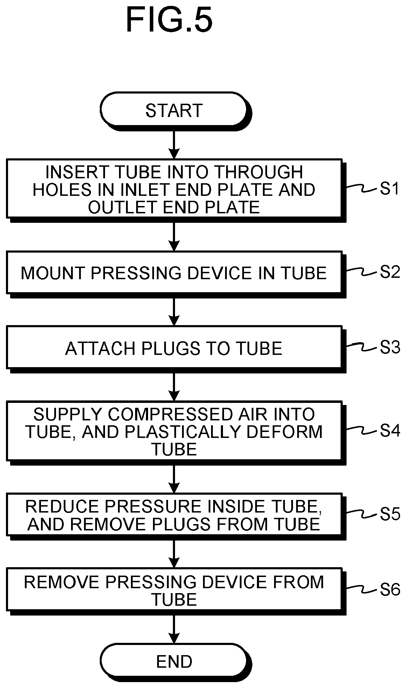

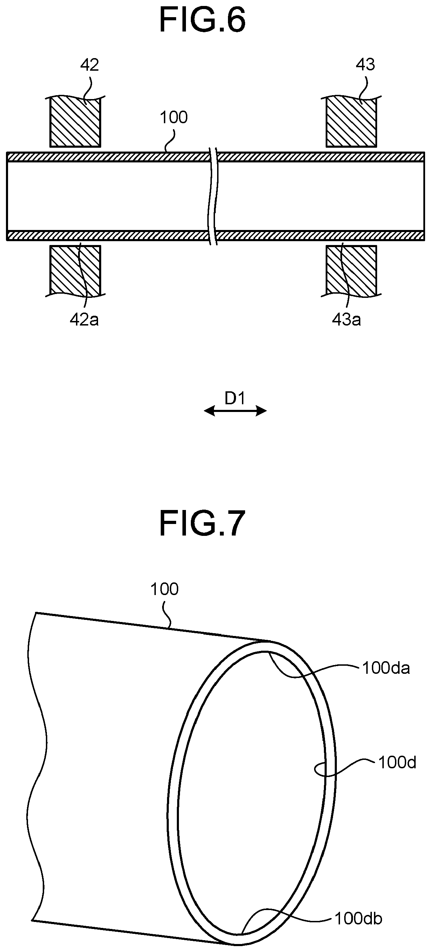

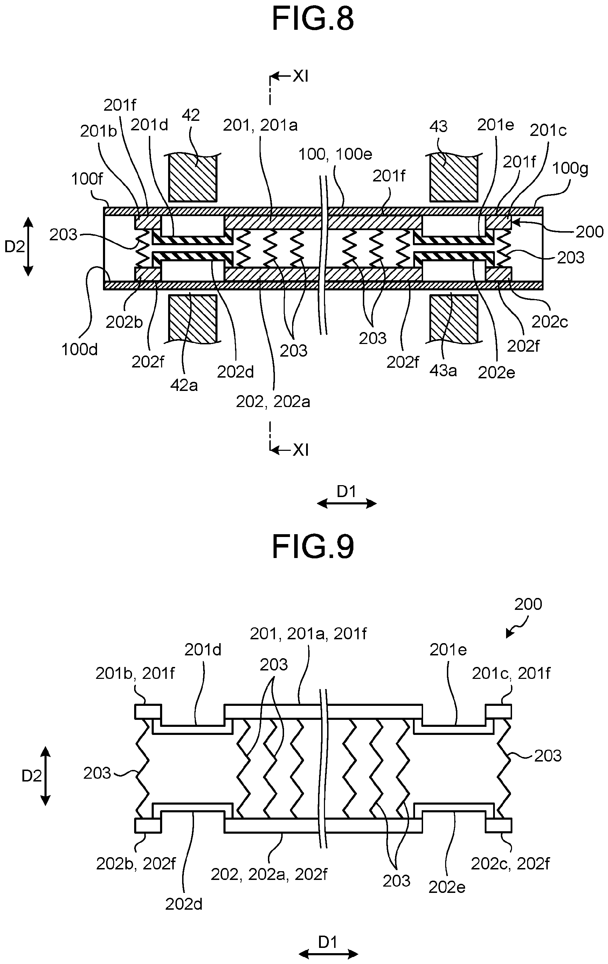

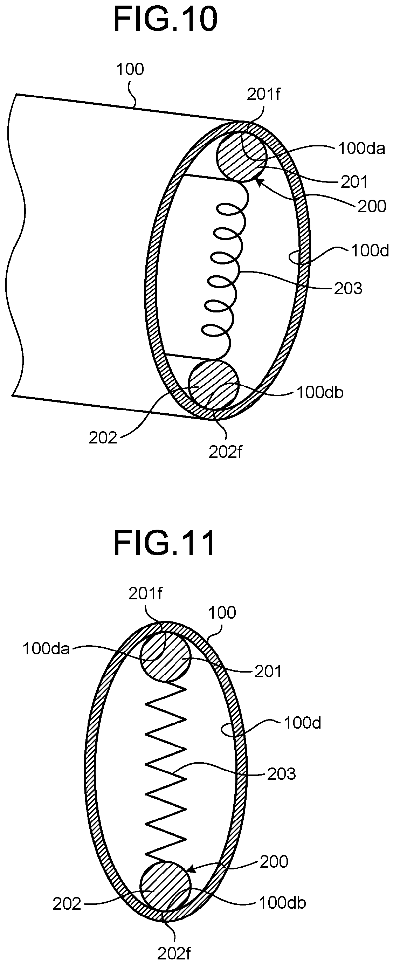

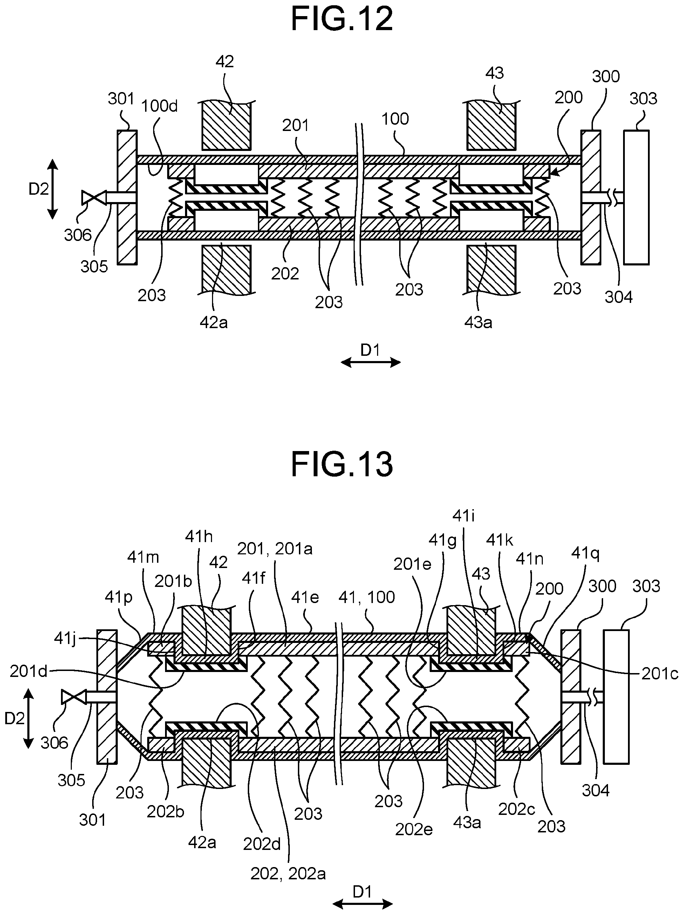

A method of manufacturing the heat exchanger 31 will be described next with reference to FIGS. 5 to 13. FIG. 5 is a flow chart illustrating the method of manufacturing the heat exchanger 31 according to the embodiment. FIG. 6 is a view illustrating an inserting step in the method of manufacturing the heat exchanger 31 according to the embodiment. FIG. 7 is an illustrative perspective view of a tube 100 that is a raw material for the cooling tube 41 of the heat exchanger 31 according to the embodiment. FIG. 8 is a view illustrating a mounting step in the method of manufacturing the heat exchanger 31 according to the embodiment. FIG. 9 is an illustrative side view of a pressing device 200 used in the method of manufacturing the heat exchanger 31 according to the embodiment. FIG. 10 is a perspective view of a portion of the tube 100 and the pressing device 200 according to the embodiment, and is a view of a state in which the pressing device 200 is mounted in the tube 100. FIG. 11 is a sectional view taken along line XI-XI in FIG. 8. FIG. 12 is a view illustrating a plug attaching step included in a forming step in the method of manufacturing the heat exchanger 31 according to the embodiment. FIG. 13 is a view illustrating a pressing step included in the forming step in the method of manufacturing the heat exchanger 31 according to the embodiment.

As illustrated in FIG. 5, the tube 100 (see FIG. 6), which is a raw material for the cooling tube 41, is first inserted into the through holes 42a, 43a in the inlet end plate 42 and the outlet end plate 43 (S1: inserting step). FIG. 6 illustrates the state in which the tube 100 is inserted into the through holes 42a, 43a. As illustrated in FIG. 6, the tube 100 has a smaller diameter than those of the through holes 42a, 43a. The tube 100 has an external shape that enables insertion into the through holes 42a, 43a. As illustrated in FIG. 7, the tube 100 is an elliptic tube. The cross section of the tube 100 orthogonal to the axial direction, that is, the cross section of the tube 100 orthogonal to the plate arrangement direction D1, is elliptic along the outer peripheries of the through holes 42a, 43a. The tube 100 is, for example, made of a metallic material such as stainless steel. At the inserting step, the tube 100 is inserted into the through holes 42a, 43a in such a manner that the major axis direction of the elliptic shape of the tube 100 is along the major axis direction of the elliptic shapes of the through holes 42a, 43a, and that both ends of the tube 100 in the axial direction of the tube 100 are located outside the inlet end plate 42 and the outlet end plate 43. At this time, the tube 100 is also inserted into guide plate through holes (not illustrated) of the two guide plates 44. The guide plate through holes (not illustrated) each have a diameter equal to or larger than that of the inside large diameter part 41e.

As illustrated in FIG. 5, the pressing device 200 (FIG. 8) is mounted in the tube 100 (S2: mounting step). FIG. 8 illustrates the state in which the pressing device 200 is mounted in the tube 100.

The pressing device 200 will be described with reference to FIGS. 8 to 11. As illustrated in FIGS. 8 and 9, the pressing device 200 has a first pressing part 201, a second pressing part 202, and a plurality of elastic members 203.

The first pressing part 201 is formed into a rod shape that extends in the axial direction of the tube 100 when placed in the tube 100. The first pressing part 201 is circular in cross section. The first pressing part 201 has an inside part 201a, two outside parts 201b, 201c, and two connecting parts 201d, 201e. The inside part 201a is located between the through hole 42a and the through hole 43a, that is, inside the through hole 42a and the through hole 43a. The two outside parts 201b, 201c are located outside the through hole 42a and the through hole 43a. The two outside parts 201b, 201c are connected to both ends of the inside part 201a through the two connecting parts 201d, 201e. The inside part 201a and the two outside parts 201b, 201c are, for example, made of a metallic material or a synthetic resin. The connecting parts 201d, 201e are, for example, made of a rubber material, and are elastically deformable. The first pressing part 201 has first contact surfaces 201f. The first contact surfaces 201f are provided on the inside part 201a and the two outside parts 201b, 201c. As illustrated in FIGS. 10 and 11, the first contact surface 201f is a curved surface along one (opposing part 100da as an example) of two opposing parts 100da, 100db of an inner peripheral surface 100d of the tube 100 that are opposed to each other in the major axis direction of the elliptic cross section.

As illustrated in FIGS. 8 and 9, the second pressing part 202 is provided so as to be opposed to the first pressing part 201, and is spaced apart from the first pressing part 201. The second pressing part 202 has the same structure as that of the first pressing part 201. The second pressing part 202 has an inside part 202a, two outside parts 202b, 202c, and two connecting parts 202d, 202e. The second pressing part 202 is circular in cross section. The inside part 202a is located between the through hole 42a and the through hole 43a, that is, inside the through hole 42a and the through hole 43a. The two outside parts 202b, 202c are located outside the through hole 42a and the through hole 43a. The two outside parts 202b, 202c are connected to both ends of the inside part 202a through the two connecting parts 202d, 202e. The inside part 202a and the two outside parts 202b, 202c are, for example, made of a metallic material or a synthetic resin. The connecting parts 202d, 202e are, for example, made of a rubber material, and are elastically deformable. The second pressing part 202 has second contact surfaces 202f. The second contact surfaces 202f are provided on the inside part 202a and the two outside parts 202b, 202c. As illustrated in FIGS. 10 and 11, the second contact surface 202f is a curved surface along the other (opposing part 100db as an example) of the two opposing parts 100da, 100db of the inner peripheral surface 100d of the tube 100, which are opposed to each other in the major axis direction.

As illustrated in FIGS. 8 and 9, the elastic members 203 are coil springs. The elastic members 203 may be leaf springs and the like. The elastic members 203 are arranged to be spaced from each other in the axial direction of the tube 100, and are interposed between the first pressing part 201 and the second pressing part 202. Specifically, the elastic members 203 are interposed between the inside part 201a and the two outside parts 201b, 201c of the first pressing part 201 and the inside part 202a and the two outside parts 202b, 202c of the second pressing part 202.

As illustrated in FIG. 8, at the mounting step, the pressing device 200 is placed in the tube 100 in such a manner that the inside part 201a of the first pressing part 201 and the inside part 202a of the second pressing part 202 are located between the two through holes 42a, 43a in the tube 100, and that the two outside parts 201b, 201c of the first pressing part 201 and the two outside parts 202b, 202c of the second pressing part 202 are located outside the two through holes 42a, 43a in the tube 100. That is, the pressing device 200 is placed inside the tube 100 with the elastic members 203 compressed so that the first pressing part 201 and the second pressing part 202 press the tube 100 mutually oppositely in directions in which the diameter of a part 100e and the diameters of protruding parts 100f, 100g expand, the part 100e being located between two of the through holes 42a, 43a of the two end plates, the inlet end plate 42 and the outlet end plate 43 in the tube 100, the protruding parts 100f, 100g protruding from the two through holes 42a, 43a to the outside of the inlet end plate 42 and the outlet end plate 43. Here, portions of the connecting parts 201d, 201e, 202d, 202e are located inside the through holes 42a, 43a. In the pressing device 200 thus placed in the tube 100, all the elastic members 203 are located outside the through holes 42a, 43a. Additionally, the pressing device 200 is placed inside the tube 100 in such a manner that the first pressing part 201 and the second pressing part 202 are arranged in the major axis direction of the through holes 42a, 43a. That is, at the mounting step, the pressing device 200 is mounted in the tube 100 in such a manner that the first contact surface 201f is in contact with the one of the opposing parts 100da, and that the second contact surface 202f is in contact with the other of the opposing parts 100db (FIG. 11).

Subsequently, as illustrated in FIG. 5, plugs 300, 301 (see FIG. 12) are attached to both ends of the tube 100 (S3). FIG. 12 illustrates the state in which the plugs 300, 301 are attached to both ends of the tube 100. The plug 300 has a supply pipe 304 connected thereto, the supply pipe 304 supplying compressed air that has been delivered from a compressed air supply device 303 into the tube 100. The plug 301 has a discharge pipe 305 connected thereto, the discharge pipe 305 discharging the compressed air inside the tube 100. The discharge pipe 305 is opened and closed by a valve 306. The plugs 300, 301 are pressed by the tube 100 with the tube 100 sandwiched therebetween. In this manner, both ends of the tube 100 are closed.

Subsequently, as illustrated in FIG. 5, compressed air is supplied from the compressed air supply device 303 into the tube 100 with the valve 306 closed, and the tube 100 is plastically deformed (S4). Here, the compressed air builds up the pressure in the tube 100, thereby pressing the tube 100 in the direction in which the diameters (the outside diameter and the inside diameter) increase. Here, the tube 100 is also pressed in the major axis direction of the elliptic shape of the tube 100 by the elastic force of the pressing device 200. Consequently, the cross section of the tube 100 is deformed to an elliptic shape similar to the elliptic shape before deformation. As illustrated in FIG. 13, such deformation forms the inside large diameter part 41e, the two inside connecting parts 41f, 41g, the two insertion parts 41h, 41i, the two outside connecting parts 41j, 41k, the two outside large diameter parts 41m, 41n, and the two diameter varying parts 41p, 41q in the tube 100. Specifically, the inside large diameter part 41e and the two inside connecting parts 41f, 41g are formed by the pressure from the inside part 201a, 202a. The two outside connecting parts 41j, 41k, the two outside large diameter parts 41m, 41n, and the two diameter varying parts 41p, 41q are also formed by the pressure from the outside parts 202b, 202c. The respective cross sections of the inside large diameter part 41e, the two inside connecting parts 41f, 41g, the two insertion parts 41h, 41i, the two outside connecting parts 41j, 41k, the two outside large diameter parts 41m, 41n, and the two diameter varying parts 41p, 41q orthogonal to the plate arrangement direction D1 have elliptic shapes the major axis direction of which is along an arrangement direction D2 of the first pressing part 201 and the second pressing part 202. Here, the connecting parts 201d, 201e, 202d, 202e are elastically deformed. Both ends of the tube 100 are pressed by the plugs 300, 301, which causes the diameter varying parts 41p, 41q.

Subsequently, as illustrated in FIG. 5, the valve 306 is opened to reduce the pressure inside the tube 100, and the plugs 300, 301 are removed from the tube 100 (S5). Subsequently, the elastic members 203 are compressed, and the pressing device 200 is removed from the tube 100 (S6: removing step). In this manner, the cooling tube 41 is formed, and the cooling tubs 41 is fastened to the inlet end plate 42 and the outlet end plate 43.

Formation and fastening of the cooling tubes 41 mentioned above are performed sequentially one cooling tube 41 at a time. That is, the cooling tubes 41 are formed and fastened one by one. The cooling tube cover 45 may be attached to the inlet end plate 42 and the outlet end plate 43 before formation and fastening of the cooling tubes 41, or may be attached to the inlet end plate 42 and the outlet end plate 43 after formation and fastening of the cooling tubes 41.

### Effects of Embodiment

As described above, in the method of manufacturing the heat exchanger 31 (heat exchanger for a rotating electrical machine) according to the present embodiment, at the mounting step, the pressing device 200 is placed inside the tube 100 with the elastic members 203 compressed so that the first pressing part 201 and the second pressing part 202 press the tube 100 mutually oppositely in directions in which the diameter of the part 100e located between the two through holes 42a, 43a of at least two of the end plates, the inlet end plate 42 and the outlet end plate 43 (supporting members) in the tube 100 expands, and the pressing device 200 is mounted in the tube 100. At the forming step, the pressure (air pressure) is built up in the tube 100 in which the pressing device 200 is mounted, and the tube 100 is plastically deformed, whereby the inside large diameter part 41e and the inside connecting parts 41f, 41g are formed in the tube 100. The inside large diameter part 41e is located between the two end plates, the inlet end plate 42 and the outlet end plate 43. The cross section of the inside large diameter part 41e orthogonal to the plate arrangement direction D1 has an elliptic shape the major axis direction of which is along the arrangement direction D2 of the first pressing part 201 and the second pressing part 202, and the cross section has a larger external shape than those of the through holes 42a, 43a. The inside connecting parts 41f, 41g connect the inside large diameter part 41e to the insertion parts 41h, 41i located inside the through holes 42a, 43a, and face the inlet end plate 42 and the outlet end plate 43.

The cooling tube 41 thus formed using the tube 100 as a raw material is positioned by the inside connecting parts 41f, 41g and the insertion parts 41h, 41i relative to the inlet end plate 42 and the outlet end plate 43, and is fastened to the inlet end plate 42 and the outlet end plate 43. Consequently, fastening the cooling tube 41 to the inlet end plate 42 and the outlet end plate 43 does not need sticking them together with an adhesive, which can increase the reliability of fastening of the cooling tube 41 to the inlet end plate 42 and the outlet end plate 43. If the pressure inside the tube 100 is built up without using the pressing device 200, the cross section of the tube 100 is changed from the elliptic shape to a perfect circle. In the present embodiment, however, the cross section of the tube 100 can be kept in the elliptic shape by using the pressing device 200.

In the present embodiment, the pressing device 200 has the elastic members 203 arranged to be spaced from each other in the axial direction of the tube 100 when the pressing device 200 is placed in the tube 100. Thus, the elastic force of the elastic members 203 acting on a given range of the tube 100 can be kept constant easily, for example, so that the shape accuracy of the cooling tube 41 can be increased easily.

In the present embodiment, at the mounting step, the pressing device 200 is mounted in the tube 100 in such a manner that all the elastic members 203 are located outside the through holes 42a, 43a. That is, the elastic members 203 are not disposed at the parts of the tube 100 that correspond to the through holes 42a, 43a. Thus, the elastic force of the elastic members 203 can be used to form parts other than the insertion parts 41h, 41i in the tube 100.

In the present embodiment, the cross section of the tube 100 before being plastically deformed at the forming step, the cross section being orthogonal to the axial direction of the tube 100, is elliptic. The first pressing part 201 has the first contact surfaces 201f. The first contact surfaces 201f along one (opposing part 100da as an example) of the two opposing parts 100da, 100db of an inner peripheral surface 100d of the tube 100, which are opposed to each other in the major axis direction of the elliptic cross section before being plastically deformed. The second pressing part 202 has the second contact surface 202f. The second contact surfaces 202f along the other (opposing part 100db as an example) of the two opposing parts 100da, 100db. At the mounting step, the pressing device 200 is mounted in the tube 100 in such a manner that the first contact surface 201f is in contact with the one of the opposing parts 100da, and that the second contact surface 202f is in contact with the other of the opposing parts 100db. Thus, because the first contact surface 201f and the second contact surface 202f have shapes along the opposing parts 100da, 100db, specifically, the respective cross sections of the first contact surface 201f and the second pressing part 202 are circles in which the opposing parts 100da, 100db are inscribed, the curvature of the opposing parts 100da, 100db can be maintained easily even if the tube 100 is plastically deformed. Consequently, the shape accuracy of the cooling tube 41 can be increased easily.

In the present embodiment, at the mounting step, the pressing device 200 is placed inside the tube 100 with the elastic members 203 compressed so that the first pressing part 201 and the second pressing part 202 press the tube 100 mutually oppositely in directions in which the outside diameter and the inside diameter of the part 100e located between the two through holes 42a, 43a in the tube 100 and the outside diameters and inside diameters of the protruding parts 100f, 100g expand. The protruding parts 100f, 100g are parts protruding from the two through holes 42a, 43a in the tube 100 to the outsides of the two end plates, the inlet end plate 42 and the outlet end plate 43. At the forming step, the pressure is built up in the tube 100 in which the pressing device 200 is mounted, and the tube 100 is deformed, whereby the outside large diameter parts 41m, 41n and the outside connecting parts 41j, 41k are formed at the protruding parts 100f, 100g. The cross sections of the outside large diameter parts 41m, 41n orthogonal to the plate arrangement direction D1 have elliptic shapes the major axis direction of which is along the plate arrangement direction D1, and the cross sections have larger external shapes than those of the through holes 42a, 43a. The outside connecting parts 41j, 41k connect the outside large diameter parts 41m, 41n to the insertion parts 41h, 41i. Thus, the cooling tube 41 is positioned relative to the inlet end plate 42 and the outlet end plate 43 not only by the inside connecting parts 41f, 41g and the insertion parts 41h, 41i but also by the outside connecting parts 41j, 41k, and fastened to the inlet end plate 42 and the outlet end plate 43. Consequently, without relying on fastening of the cooling tube 41 to the inlet end plate 42 and the outlet end plate 43 for adhesive strength, the inlet end plate 42 is sandwiched between the two large diameter parts (the inside large diameter part 41e and the outside large diameter part 41m) of the cooling tube 41, and the outlet end plate 43 is sandwiched between the two large diameter parts (the inside large diameter part 41e and the outside large diameter part 41n) of the cooling tube 41, which can further increase the reliability of fastening of the cooling tube 41 to the inlet end plate 42 and the outlet end plate 43.

In the present embodiment, the through holes 42a, 43a have elliptic shapes. At the mounting step, the pressing device 200 is placed inside the tube 100 in such a manner that the first pressing part 201 and the second pressing part 202 are arranged in the major axis direction of the through holes 42a, 43a. Thus, the major axis direction of the elliptic shape of the cooling tube 41 can easily follow the major axis direction of the through holes 42a, 43a.

### Modification

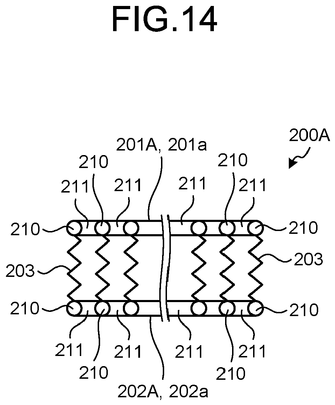

FIG. 14 is an illustrative side view of a pressing device 200A according to a modification of the embodiment. As illustrated in FIG. 14, the inside part 201a of a first pressing part 201A and the inside part 202a of the second pressing part 202A in the pressing device 200A both have a plurality of spheres 210 and a plurality of connecting parts 211 that connect the spheres 210 to each other. In the pressing device 200A, the outside parts 201b, 201c, 202b, 202c and the connecting parts 201d, 201e, 202d, 202e are not provide. That is, the pressing device 200A has such a structure as to be disposed only between the inlet end plate 42 and the outlet end plate 43.

While the embodiment of the present invention has been described above, the embodiment has been presented by way of example only, and is not intended to limit the scope of the inventions. The embodiment described above may be embodied in a variety of other forms; furthermore, various omissions, substitutions, combinations, and changes may be made without departing from the spirit of the inventions. Additionally, the embodiment may be embodied by changing specifications (structure, type, direction, shape, size, length, width, thickness, height, number, configuration, position, material, for example) of each component as appropriate.

For example, the pressing device 200 may have such a structure as to be disposed only between the inlet end plate 42 and the outlet end plate 43. That is, the structure may be such that the first pressing part 201 has only the inside part 201a, the second pressing part 202 has only the inside part 202a, and the elastic members 203 are disposed only between the inside part 201a and the inside part 202a. The cooling tube 41 may have an elliptic cross section in the part between the inlet end plate 42 and the outlet end plate 43 and have a perfect circular cross section in the part outside the inlet end plate 42 and the outlet end plate 43.

The pressing device 200A may have the outside parts 202b, 202c and the connecting parts 201d, 201e, 202d, 202e. In this case, the outside parts 202b, 202c may have a structure having the spheres 210.

At the forming step of the heat exchanger 31, the fluid to be supplied into the tube 100 in order to build up the pressure in the tube 100 may be a liquid instead of a gas.

The heat exchanger 31 may be disposed in the underside or on the side of the frame 11.

The cross sections of the first pressing part 201 and the second pressing part 202 may be semicircular, for example.

The cross section of the tube 100 before being plastically deformed may have a perfect circular shape.

The first pressing parts 201, 201A and the second pressing parts 202, 202A may be coupled by a connecting member that is elastically deformable and that is different from the elastic members 203, and this connecting member, the first pressing parts 201, 201A, and the second pressing parts 202, 202A may constitute a tubular member that houses therein the elastic members 203.

According to the method of manufacturing the heat exchanger for a rotating electrical machine of an embodiment, the method of manufacturing the heat exchanger for a rotating electrical machine can be provided in which a decrease can be prevented easily in reliability of fastening of the tubes having elliptic cross sections to the supporting members.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

In a method of manufacturing a heat exchanger for a rotating electrical machine, a pressing device is placed inside a tube with elastic members compressed so that a first pressing part and a second pressing part press the tube mutually oppositely in directions in which the diameter of at least a part of the tube located between two through holes of two supporting members expands. Pressure is built up in the tube and the tube is plastically deformed to form an inside large diameter part and inside connecting parts.

## Claims

1. A method of manufacturing a heat exchanger for a rotating electrical machine, the method comprising:
inserting a tube into through holes of two supporting members, the tube having an external shape that enables insertion into the through holes that are provided in the two supporting members arranged to be separated from each other, and that are arranged in an arrangement direction of the two supporting members;
mounting a pressing device in the tube by placing the pressing device inside the tube, the pressing device having, when placed in the tube, a first pressing part that extends in an axial direction of the tube, a second pressing part that is provided so as to be opposed to the first pressing part and that extends in the axial direction of the tube, and an elastic member that is interposed between the first pressing part and the second pressing part, the mounting being performed with the elastic member compressed so that the first pressing part and the second pressing part press the tube mutually oppositely in directions in which a diameter of at least a part of the tube expands, the part being located between two of the through holes of the two supporting members;
forming an inside large diameter part and inside connecting parts in the tube by building up pressure inside the tube in which the pressing device is mounted and plastically deforming the tube, the inside large diameter part being located between the two supporting members, a cross section of the inside large diameter part orthogonal to the arrangement direction of the two supporting members having an elliptic shape, a major axis direction of the elliptic shape being along an arrangement direction of the first pressing part and the second pressing part, an external shape of the cross section being larger than external shapes of the through holes, the inside connecting parts connecting the inside large diameter part to insertion parts and facing the supporting members, the insertion parts being parts located inside the through holes in the tube; and
removing the pressing device from the tube in which the inside large diameter part and the inside connecting parts are formed.

2. The method of manufacturing the heat exchanger for the rotating electrical machine according to claim 1, wherein the pressing device has, as the elastic member, a plurality of elastic members arranged to be spaced from each other in the axial direction of the tube when the pressing device is placed in the tube.

3. The method of manufacturing the heat exchanger for the rotating electrical machine according to claim 2, wherein, at the mounting, the pressing device is mounted in the tube in such a manner that all the elastic members are located outside the through holes.

4. The method of manufacturing the heat exchanger for the rotating electrical machine according to any one of claims 1 to 3, wherein
a cross section of the tube has an elliptic cross section orthogonal to the axial direction of the tube before being plastically deformed at the forming,
the first pressing part has a first contact surface along one of two opposing parts of an inner peripheral surface of the tube before being plastically deformed, the opposing parts being opposed to each other in a major axis direction of an elliptic cross section,
the second pressing part has a second contact surface along the other of the two opposing parts, and
at the mounting, the pressing device is mounted in the tube in such a manner that the first contact surface is in contact with the one of the opposing parts, and that the second contact surface is in contact with the other of the opposing part.

5. The method of manufacturing the heat exchanger for the rotating electrical machine according to any one of claims 1 to 4, wherein
at the mounting, the pressing device is placed inside the tube with the elastic member compressed so that the first pressing part and the second pressing part press the tube mutually oppositely in directions in which an outside diameter and an inside diameter of the part of the tube, the part being located between the two of the through holes of the two supporting members, and outside diameters and inside diameters of protruding parts expand, the protruding parts being parts protruding from the two of the through holes to outsides of the two supporting members, and
at the forming, outside large diameter parts and outside connecting parts are formed at the protruding parts by building up pressure inside the tube in which the pressing device is mounted and deforming the tube, cross sections of the outside large diameter parts orthogonal to the arrangement direction of the two supporting members having elliptic shapes, major axis directions of the elliptic shapes being along the arrangement direction of the first pressing part and the second pressing part, external shapes of the cross sections being larger than external shapes of the through holes, the outside connecting parts connecting the outside large diameter parts to the insertion parts and facing the supporting members.

6. The method of manufacturing the heat exchanger for the rotating electrical machine according to any one of claims 1 to 5, wherein
the through holes have elliptic shapes, and
at the mounting, the pressing device is placed inside the tube in such a manner that the first pressing part and the second pressing part are arranged in a major axis direction of the through holes.

7. A pressing device mounted in a tube in a method of manufacturing a heat exchanger for a rotating electrical machine, the method including inserting the tube into through holes of two supporting members, the tube having an external shape that enables insertion into the through holes that are provided in the two supporting members arranged to be separated from each other, and that are arranged in an arrangement direction of the two supporting members, the pressing device comprising:
a first pressing part that extends in an axial direction of the tube;
a second pressing part that is provided so as to be opposed to the first pressing part and that extends in the axial direction of the tube; and
an elastic member that is interposed between the first pressing part and the second pressing part, wherein
the pressing device is placed inside the tube with the elastic member compressed so that the first pressing part and the second pressing part press the tube mutually oppositely in directions in which a diameter of at least a part of the tube expands, the part being located between two of the through holes of the two supporting members.
